# EUROPEAN PATENT SPECIFICATION

(11) **EP 2 299 881 B1**
(45) Date of publication and mention of the grant of the patent: **07.09.2011**
(21) Application number: 09762143.7
(22) Date of filing: 10.06.2009
(51) Int. Cl.: A47J 31/44, A47J 31/60

(54) **DEVICE FOR WHISKING MILK AND METHOD FOR CLEANING SUCH A DEVICE**
VORRICHTUNG ZUM QUIRLEN VON MILCH UND VERFAHREN ZUM REINIGEN EINER SOLCHEN VORRICHTUNG
DISPOSITIF POUR FOUETTER LE LAIT ET SON PROCÉDÉ DE NETTOYAGE

(30) Priority: 13.06.2008 EP 08158186
(43) Date of publication of application: 30.03.2011
(73) Proprietor: Koninklijke Philips Electronics N.V., 5621 BA Eindhoven (NL)
(72) Inventor: DOUMA, Sipke, T., 5656 AE Eindhoven (NL); QUAH, Peng, C., 5656 AE Eindhoven (NL)
(74) Representative: Coops, Peter
(86) International application number: PCT/IB2009/052464
(87) International publication number: WO 2009/150616

(56) References cited:
- WO-A-2004/058020
- US-A1- 2005 233 043

## Description

### FIELD OF THE INVENTION

The present invention relates to a method for cleaning a device which is suitable to be used for whisking milk, which device comprises a duct system having an intake duct for taking in milk, an intake duct for taking in a cleaning fluid, and a central duct in which both the milk intake duct and the cleaning fluid intake duct are merging, and which device further comprises a pump which is arranged in the central duct, wherein the central duct is filled with the cleaning fluid.

The present invention also relates to a device which is suitable to be used for whisking milk, which device comprises a duct system having an intake duct for taking in milk, an intake duct for taking in a cleaning fluid, and a central duct in which both the milk intake duct and the cleaning fluid intake duct are merging, and which device further comprises flow controlling means which are capable of assuming a position for blocking the milk intake duct and a position for allowing a flow of fluid to pass, and a pump which is arranged in the central duct.

### BACKGROUND OF THE INVENTION

Whisking milk should be understood as being a process of frothing milk by mixing the milk with air without a use of steam. Although such a process is known, and devices have been developed for performing such a process, most devices which are suitable to be used for emitting milk froth and which are currently available in the market are adapted to use steam. In such devices, the steam is used for pumping the milk out of a container such as a cartridge or jug, heating the milk, pumping air, and pumping the obtained milk froth to an outlet of the device. However, using steam for making milk froth has disadvantages, as will be explained in the following.

A first disadvantage is that when steam is used, the milk is always heated. Therefore, in a situation in which it is desired to have cold milk froth, the froth needs to be cooled down after the frothing process has taken place. A second disadvantage is that in general, a steam supply is relatively difficult to control. A third disadvantage is that devices for generating steam need to be decalcified from time to time. A fourth disadvantage is that the use of steam is dangerous on the basis of the fact that it is a hot fluid which may cause injuries to a user. A fifth disadvantage is that the use of steam involves a construction which is relatively difficult to clean. It is a well-known fact that cleaning of a device for handling milk is very important, as milk residues may grow bad and spoil milk froth to be made in future applications of the device.

Using whisking overcomes the problems associated with using steam. However, known devices which are suitable for whisking milk require a lot of cleaning effort.

A device for whisking milk is known from US 2005/0233043. In particular, the device comprises a suction line and a pump, which are suitable to be used for suctioning cold milk from a container, and a continuous-flow heater for heating the milk, wherein the suction line is connected to an output line for delivering milk foam or a warm milk drink to another container such as a cup. Furthermore, the known device comprises an air supply line which opens into the suction line, and which serves for supplying air when it is desired to have milk foam.

After a process of producing milk foam or a hot milk drink, for the purpose of cleaning of the continuous-flow heater and the lines leading to and from the heater, a cleaning fluid can be introduced from a source via a valve and a line into the suction line, and pumped into the outlet line by means of the pump. US 2005/0233043 discloses that it is preferred if a certain quantity of water is pumped through the suction line after each flow of milk, so that a settling of milk residue can be prevented, especially in the continuous-flow heater. However, in the known device, a portion of the suction line, which is a portion extending between an end situated at the milk container and a non-return valve for preventing a back flow of milk, is not cleaned, as the line for supplying the cleaning fluid opens into the suction line at a position upstream of the non-return valve. Hence, it is possible for milk residue to settle in the said portion of the suction line, which is a disadvantage of the known device.

### SUMMARY OF THE INVENTION

It is an object of the present invention to provide a method for cleaning a device which is suitable to be used for whisking milk, and which comprises a cleaning fluid intake duct, which method offers a possibility of cleaning a milk intake duct of the device besides a central duct of the device in which the milk intake duct is merging, without the need of introducing a separate, additional cleaning system. This object is achieved by a method according to which both the central duct and the milk intake duct are filled with the cleaning fluid which is flowing from the cleaning fluid intake duct when the cleaning method is being carried out.

In particular, the method according to the present invention may be applied to a milk whisking device which further comprises flow controlling means which are capable of assuming a position for blocking the milk intake duct and a position for allowing a flow of fluid to pass in two directions, and a pump which is arranged in the cleaning fluid intake duct. In that case, it is possible to have two subsequent cleaning stages, wherein, in a first cleaning stage, both the pump which is arranged in the cleaning fluid intake duct and the pump which is arranged in the central duct are operated and the flow controlling means are put at a position for blocking the milk intake duct, and wherein, in a second cleaning stage, only the pump which is arranged in the cleaning fluid intake duct is operated and the flow controlling means are put at a position for allowing a flow of fluid to pass.

In the first cleaning stage, the pump which is arranged in the cleaning fluid intake duct is operated for realizing a flow of the cleaning fluid, and the pump which is arranged in the central duct is operated for ensuring that the flow of the cleaning fluid takes place through the central duct. In the second cleaning stage, the pump which is arranged in the central duct is in a deactivated state, as a result of which this pump acts like a closed valve. Furthermore, the flow controlling means are put at a position for allowing a flow of fluid to pass, so that an open connection between the milk intake duct and the cleaning fluid intake duct is obtained, through a portion of the central duct, and the pump which is arranged in the cleaning fluid intake duct is operated for ensuring that the cleaning fluid flows from the cleaning fluid intake duct to the milk intake duct. By having the two subsequent cleaning stages, it is achieved that the central duct is filled with the cleaning fluid first, and that the milk intake duct is filled with the cleaning fluid at a somewhat later stage. It is sufficient to have only one cleaning system, wherein filling of the milk intake duct with the cleaning fluid may be realized by having a pump in the cleaning system.

In order to achieve that the milk intake duct gets completely filled with the cleaning fluid, while preventing the cleaning fluid from flowing beyond a free end of the milk intake duct, i.e. an end which is positioned in a milk container or the like, it is preferred if in the second cleaning stage, the pump which is arranged in the cleaning fluid intake duct is only operated for pumping a volume of cleaning fluid which corresponds to the volume of a free portion of the milk intake duct extending from a position where the flow controlling means are located, and wherein the operation of the pump is terminated as soon as this volume has passed the pump. It is to be understood that any suitable means for controlling the operation of the pump may be provided, so that it is possible to actually realize a required dosing of the cleaning fluid in practice.

Preferably, the cleaning method according to the present invention is carried out each time the milk whisking device has been operated for making a milk product such as milk froth or a milk beverage. Controlling means of the device may be adapted to start a cleaning action automatically, but it is also possible that the cleaning action is only started after a user of the device has provided appropriate input, for example by pressing a button.

The milk whisking device may further comprise heating means which are arranged in the central duct, so that it is possible for the device to deliver hot milk froth or a hot milk drink. Advantageously, a bypass duct which is connected in parallel to a portion of the central duct where the heating means are located is provided, and flow controlling means which are capable of assuming a position for blocking one of the bypass duct and the portion of the central duct where the heating means are located, while leaving another of these ducts open are also provided, as in that way, it is possible to have a choice between performing a heating process, or not. When a cleaning action is carried out, it is only necessary to supply the cleaning fluid to the bypass duct when the heating means have not been used during the preceding operation of the device. Cleaning the right path through the device is achieved when the flow controlling means are kept at a position which has been set during a preceding process of operating the device for emitting milk froth or a milk beverage.

It is most practical to have two outlets in the milk whisking device, wherein one outlet may be used for actually delivering a milk product to a receptacle such as a cup, and wherein another outlet may be used for delivering residual milk and cleaning fluid to another receptacle such as a drip tray. A delivery of residual milk takes place as soon as a cleaning action is performed, as in that case, the residual milk is pushed out under the influence of a pumping action and a flow of cleaning fluid. A delivery of cleaning fluid takes place as soon as the device is operated to deliver a milk product, as in that case, the cleaning fluid needs to be removed from the milk intake duct and the central duct first, wherein this may be realized as a consequence of a new supply of milk. For sake of completeness, it is noted that in principle, it is possible to have only one outlet, wherein the user of the device is required to decide whether or not to put a cup at this outlet at a certain time, or an automated system is required for doing so. However, in order to avoid a situation in which the operation of the device should be monitored in order to put a cup at a position for receiving a milk product from the device at exactly the right time, it is preferred to have two separate outlets.

In an embodiment of the milk whisking device in which two outlets as mentioned in the foregoing are present, this device comprises an outlet duct which is merging in the central duct at a position downstream of the pump which is arranged in the central duct, and flow controlling means which are capable of blocking one of the outlet duct and the central duct at a position downstream of the connection of the outlet duct to the central duct while leaving another of these ducts open. When a cleaning action is performed in this embodiment of the milk whisking device, the flow controlling means are put at a different position than a position which is set during a preceding process of operating the device for emitting a milk product, so that milk residue and cleaning fluid may be discharged through the other outlet than the outlet which serves for emitting the milk products.

For the purpose of making milk froth, it is advantageous if the milk whisking device further comprises an intake duct for taking in air, which merges in the central duct. Preferably, a position where the air intake duct merges in the central duct corresponds to a position where the cleaning fluid intake duct merges in the central duct, and the device is equipped with flow controlling means which are capable of blocking one of the cleaning fluid intake duct and the air intake duct while leaving another of these ducts open. As it is not necessary to have a supply of air during a cleaning action, the flow controlling means are set in a position for blocking the air intake duct when the cleaning method according to the present invention is carried out. On the other hand, in situations in which there is no need for a flow of cleaning fluid, the air intake duct may be open. On the basis of the insight that mutually exclusive uses of the air intake duct and the cleaning fluid intake duct are possible, it is found that it is not necessary to have separate means for blocking and opening each one of the ducts. Instead, costs may be saved by having flow controlling means which are associated with both ducts.

The present invention relates to a cleaning method as described above, and also relates to a milk whisking device comprising a duct system which has an intake duct for taking in milk, an intake duct for taking in a cleaning fluid, and a central duct in which both the milk intake duct and the cleaning fluid intake duct are merging, and which device further comprises flow controlling means which are capable of assuming a position for blocking the milk intake duct and a position for allowing a flow of fluid to pass in two directions, a pump which is arranged in the cleaning fluid intake duct, and a pump which is arranged in the central duct. It has already been explained in the foregoing that by having the two pumps as mentioned and an option of blocking and opening the milk intake fluid whenever appropriate, it is possible to clean the duct system of the device by filling both the central duct and the milk intake duct with the cleaning fluid.

In an advantageous embodiment, the milk whisking device according to the present invention further comprises a sieve, i.e. a component of perforated material or wire mesh, which is arranged at an outlet of the duct system, in particular the outlet for delivering a milk product intended for consumption by a user. On the basis of the fact that the device is equipped for cleaning its duct system, it is possible to have a sieve as mentioned, wherein there is no risk that the sieve gets contaminated by milk residues, as the sieve is automatically cleaned when a cleaning action is performed, and wherein there is no need for extra cleaning effort by a user of the device.

In most devices which are suitable to be used for frothing milk, there is a relation between a size of the milk bubbles and a temperature of the frothed milk. By applying a sieve, it is achieved that more constant froth quality can be realized, as the properties of the sieve are determining the bubble size in that case, rather than the temperature. The bubble size can be controlled in a better way, wherein this property of the froth is determined by properties of the sieve such as hole size, density of holes (i.e. amount of holes in a defined area), shape of the holes, and material of the sieve.

In a practical embodiment, the device according to the present invention comprises a drip tray for receiving waste fluid. Examples of waste fluid are milk residues which are forced to flow from the duct system of the device during a cleaning action of the device, and cleaning fluid which is forced to flow from the duct system of the device during a process of preparing a milk product. When the device comprises an outlet duct as described in the foregoing, it is advantageous if one of the central duct and this outlet duct is arranged for emitting fluid to the drip tray. Furthermore, in such a case, it is advantageous if a sieve is arranged in another of the central duct and the outlet duct, as that duct is apparently used for emitting the milk products.

With respect to the pumps of the milk whisking device, it is noted that they may be of any suitable type, for example a pump which is adapted to perform a pumping action based on the plunger principle, or a pump which is adapted to perform a pumping action based on the gear principle. Furthermore, each of the proposed flow controlling means of the device may be embodied in any suitable manner. For example, the flow controlling means may comprise electrical valves. However, as such valves are relatively expensive, another solution is sought. According to the present invention, in respect of a milk whisking device having an air intake duct which merges in the central duct, it is advantageous if a single-directional check valve is arranged in the air intake duct, as such a check valve is a relatively cheap component. Furthermore, when the air intake duct merges in the central duct at the same position as the cleaning fluid intake duct, wherein a portion of the cleaning fluid intake duct and a portion of the air intake duct are joined to one duct, it is advantageous if a single-directional check valve is arranged in this one duct. For the same reason of keeping the costs of the device at a relatively low level, the flow controlling means which are capable of assuming a position for blocking the milk intake duct and a position for allowing a flow of fluid to pass in two directions may be embodied such as to comprise a bi-directional check valve. Such a check valve is a valve which operates like a normal check valve in one direction, and which is furthermore adapted to open in an opposite direction when a fluid pressure acting in that direction reaches a predetermined limit.

The above-described and other aspects of the present invention will be apparent from and elucidated with reference to the following description of various embodiments of a milk whisking device according to the present invention.

### BRIEF DESCRIPTION OF THE DRAWINGS

The present invention will now be explained in greater detail with reference to the figures, in which equal or similar parts are indicated by the same reference signs, and in which:
figure 1 diagrammatically shows components of a milk whisking device according to a first preferred embodiment of the present invention, and also illustrates the configuration of the components in the device;
figure 2 diagrammatically shows components of a milk whisking device according to a second preferred embodiment of the present invention, and also illustrates the configuration of the components in the device;
figure 3 diagrammatically shows a bi-directional check valve in a position for allowing a flow of fluid in only one direction; and
figure 4 diagrammatically shows a bi-directional check valve in a position for allowing a flow of fluid in two opposite directions.

### DETAILED DESCRIPTION OF EMBODIMENTS

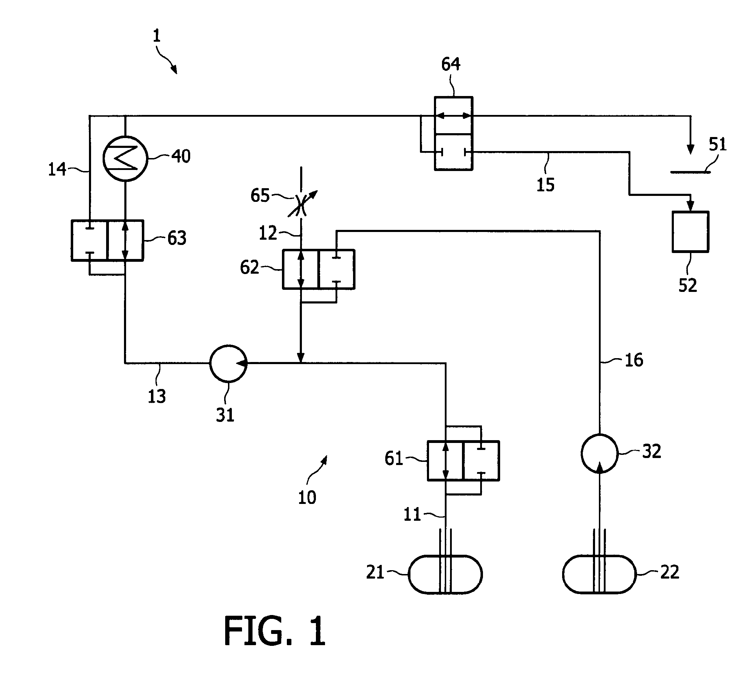

Figure 1 diagrammatically shows a set-up of a milk whisking device 1 according to a first preferred embodiment of the present invention. In general, a milk whisking device is suitable to be used for coffee, espresso and cappuccino appliances, which does not alter the fact the milk whisking device 1 may be used in other contexts as well. In any case, the milk whisking device I is adapted to make milk froth by taking in milk and air and allowing these two ingredients of milk froth to mix. The milk froth is obtained by performing a whisking process, wherein the milk is frothed without a use of steam.

The milk whisking device 1 comprises the following components, as illustrated by figure 1:
- a milk intake duct 1 1 for taking in milk from a milk reservoir 21;
- an air intake duct 12 for taking in air;
- a central duct 13 in which both the milk intake duct 11 and the air intake duct 12 are merging;
- a pump 31 which is arranged in the central duct 13 at a position downstream of positions where the milk intake duct 1 1 and the air intake duct 12 are connected to the central duct 13, which will hereinafter be referred to as frothing pump 31;
- a heat exchanger 40 which is arranged in the central duct 13 at a position downstream of the frothing pump 31;
- a bypass duct 14 which is parallel to a portion of the central duct 13 where the heat exchanger 40 is located;
- an outlet duct 15 which is merging in the central duct 13 at a position downstream of the heat exchanger 40;
- a cup support 51 which is positioned at a free end of the central duct 13;
- a drip tray 52 for receiving waste fluid, which is positioned at a free end of the outlet duct 15;
- a cleaning fluid intake duct 16 for taking in a cleaning fluid such as water from a cleaning fluid reservoir 22, which merges in the central duct 13 at the same position as the air intake duct 12; and
- a pump 32 which is arranged in the cleaning fluid intake duct 16, which will hereinafter be referred to as cleaning pump 32.

All ducts 11, 12, 13, 14, 15, 16 as mentioned are part of a duct system 10 of the milk whisking device 1. For the purpose of ensuring that in every use of the device 1, an appropriate fluid path is created in the device 1, the device 1 is equipped with a number of valves. In figure 1, four valves are shown, namely
- a first valve 61 which is capable of switching between two different positions, which is arranged such as to block the milk intake duct 11 in a first position and to allow a flow of fluid to pass in a second position, and which will hereinafter be referred to as milk valve 61;
- a second valve 62 which is capable of switching between two different positions, which is arranged such as to block the cleaning fluid intake duct 16 while leaving the air intake duct 12 open in a first position and to block the air intake duct 12 while leaving the cleaning fluid intake duct 16 open in a second position, and which will hereinafter be referred to as cleaning fluid/air valve 62;
- a third valve 63 which is capable of switching between two different positions, which is arranged such as to block the bypass duct 14 while leaving the portion of the central duct 13 where the heat exchanger 40 is located open in a first position and to block said portion of the central duct 13 while leaving the bypass duct 14 open in a second position, and which will hereinafter be referred to as heat exchanger valve 63; and
- a fourth valve 64 which is capable of switching between two different positions, which is arranged such as to block an end portion of the central duct 13 while leaving the outlet duct 15 open in a first position and to block the outlet duct 15 while leaving the end portion of the central duct 13 open in a second position, and which will hereinafter be referred to as outlet valve 64.

For the purpose of controlling the various components of the milk whisking device 1, in particular the pumps 31, 32, the heat exchanger 40 and the valves 61, 62, 63, 64, any suitable type of controlling means may be applied. For example, the device 1 may be equipped with a microcontroller (not shown) for carrying out one of a number of predetermined routines of making various milk products, depending on input provided by a user, and subsequently performing a cleaning action. In a process of making a milk product, the frothing pump 31 serves as a milk froth generator, as this pump 31 is adapted to pumping milk and air, and mixing these two fluids. With respect to the intake of air, it is noted that an adjustable restriction 65 as shown in figure 1 may be arranged at an inlet side of the air intake duct 12, and that this restriction 65 may be controlled such as to have a larger supply or a smaller supply of air, depending on the desired properties of a milk product which is to be made by means of the milk whisking device 1.

The various components of the milk whisking device 1 are cleaned by means of cleaning fluid each time a process of making a milk product has been carried out. Therefore, at the start of each process of making a milk product, the duct system 10 of the device 1 is filled with the cleaning fluid. The way in which this is achieved is explained later. First, a process of making a milk product is further explained.

When a user decides to have a milk product, he/she places a cup or another suitable receptacle (not shown) on the cup support 51 and activates the milk whisking device 1. In the device 1, the frothing pump 31 is activated, the milk valve 61 is put to a position for allowing a fluid to pass, the cleaning fluid/air valve 62 is put to a position for blocking the cleaning fluid intake duct 16 while leaving the air intake duct 12 open, the adjustable restriction 65 is put to an appropriate position, and the outlet valve 64 is put to a position for blocking an end portion of the central duct 13 while leaving the outlet duct 15 open. When the user desires to obtain a warm drink, the heat exchanger 40 is activated, and the heat exchanger valve 63 is put to a position for blocking the bypass duct 14 while leaving the portion of the central duct 13 where the heat exchanger 40 is located open. On the other hand, when the user desires to obtain a cold drink, the heat exchanger 40 is kept in a deactivated state, and the heat exchanger valve 63 is put to a position for blocking the portion of the central duct 13 where the heat exchanger 40 is located while leaving the bypass duct 14 open.

Under the influence of the frothing pump 31, milk is suctioned from the milk reservoir 21 and is made to flow through the central duct 13. Furthermore, air is suctioned in the central duct 13 as well. In the process, cleaning fluid which is present in the milk intake duct 11 and the air intake duct 12 is displaced by the flows of milk and air, respectively. Due to the action of the frothing pump 31, the cleaning fluid is displaced towards an outlet side of the duct system 10. Therefore, the outlet valve 64 is in a position for blocking an end portion of the central duct 13 while leaving the outlet duct 15 open, as in this position of the outlet valve 64, it is achieved that the cleaning fluid flows to the drip tray 52 and is received there.

In the frothing pump 31, the actual process of mixing the milk and the air takes place, so that milk froth is formed. The milk froth is pumped towards the outlet side of the duct system 10, wherein it may pass the heat exchanger 40, or not, depending on the position of the heat exchanger valve 63, as has been explained in the foregoing. All this time, cleaning fluid flows from the outlet duct 15 and is received by the drip tray 52. However, as soon as a front of the milk froth reaches the outlet valve 64, the position of the outlet valve 64 is changed, so that the outlet duct 15 is blocked, and the milk froth is allowed to flow towards an end of the central duct 13, where it is discharged in the receptacle which has been placed on the cup support 51. The flow of milk froth is continued until a predetermined quantity of milk froth has been delivered to the receptacle.

The appropriate moment in time for changing the position of the outlet valve 64 may be determined in any suitable way. For example, controlling of the various components of the milk whisking device 1 may be time-based, which is possible in view of the fact that volumes of the various ducts 11, 12, 13, 14, 15, 16 of the duct system 10 may be known, and the flow rate of the various fluids may be known as well, since this is related to properties of the pumping action. In principle, it is possible to have an alternative way of controlling, which requires a use of sensors such as a sensor for detecting a change of the nature of the fluid at the position of the position of the outlet valve 64, but this is not preferred as this involves relatively high costs.

As has been indicated in the foregoing, a cleaning process is performed in the milk whisking device 1 after a process of making a milk product and delivering this milk product to a receptacle has taken place. Preferably, the cleaning process is started automatically, so that there is no need for a user to think of doing so, and there is no risk of omission of the cleaning process. This is important, because if the cleaning process would not be performed, the duct system 10 would get contaminated by milk residues, which grow bad over time and spoil milk products which are made during following uses of the milk whisking device 1.

At the start of a cleaning process, the frothing pump 31 is kept in an activated state, and the cleaning pump 32 is activated as well. Furthermore, the milk valve 61 is put to a position for blocking the milk intake duct 11, so that the supply of milk to the central duct 13 is terminated, the cleaning fluid/air valve 62 is switched to a position for blocking the air intake duct 12 while leaving the cleaning fluid intake duct 16 open, so that a supply of cleaning fluid to the central duct 13 is realized. The position of the heat exchanger valve 63 is maintained, so that the cleaning fluid may follow the same path as the milk product. The position of the outlet valve 64 is maintained as well, so that the end portion of the central duct 13 is filled with cleaning fluid and a last quantity of the milk product is forced to flow from the central duct 13.

As soon as the cleaning fluid reaches an end of the central duct 13, the outlet valve 64 is switched to a position for blocking the end portion of the central duct 13 while opening the outlet duct 15. When a front of the cleaning fluid reaches an end of the outlet duct 15, it is achieved that both the central duct 13 and the outlet duct 15 are completely filled with the cleaning fluid. At that moment, the operation of the frothing pump 31 is terminated, and the milk valve 61 is put to a position for allowing a flow of fluid to pass. Under the influence of the cleaning pump 32, it is achieved that the milk intake duct 11 is filled with the cleaning fluid. In the process, the deactivated frothing pump 31 acts as a closed valve in the central duct 13, so that it is ensured that the cleaning fluid reaches the milk intake duct 11.

Preferably, the situation in which only the cleaning pump 32 is operated lasts only as long as necessary for filling the milk intake duct 11, wherein the pump 32 is deactivated just in time for avoiding that the cleaning fluid reaches the milk container 21.

For sake of completeness, it is noted that it is also possible to fill the end portion of the central duct 13 at a later stage, in case it is sure that the receptacle for receiving the milk product has been removed. It is possible to have another drip tray at the cup support 51 besides the above-described drip tray 52 which is positioned at a free end of the outlet duct 15, so that it is not necessary to precisely dose the cleaning fluid, or to have a single drip tray which is large enough to be located both at the end of the outlet duct 15 and at the cup support 51. The device 1 may be equipped with a sensor for detecting the presence of a receptacle, so that an appropriate moment for filling the end portion of the central duct 13 may be determined automatically. Another possibility is that a process of supplying cleaning fluid to the end portion of the central duct 13 is only carried out when the device 1 is shut down, wherein it is assumed that at that moment, the receptacle has been removed from the cup support 51, so that any excess cleaning fluid flowing from the central duct 13 is received by the drip tray.

An important advantage of the milk whisking device 1 according to the present invention resides in the fact that a cleaning action of the device 1 leads to a state of the duct system 10 in which all of the ducts 11, 12, 13, 14, 15, 16 are filled with cleaning fluid. Furthermore, the pumps 31, 32 and the heat exchanger 40 are always filled with cleaning fluid as well, and it is also ensured that any milk residue is rinsed off the valves 61, 62, 63, 64. Therefore, the milk whisking device 1 is most hygienic. What's more, there is a no need for a user to perform any cleaning action, so that the device 1 is also most convenient in use.

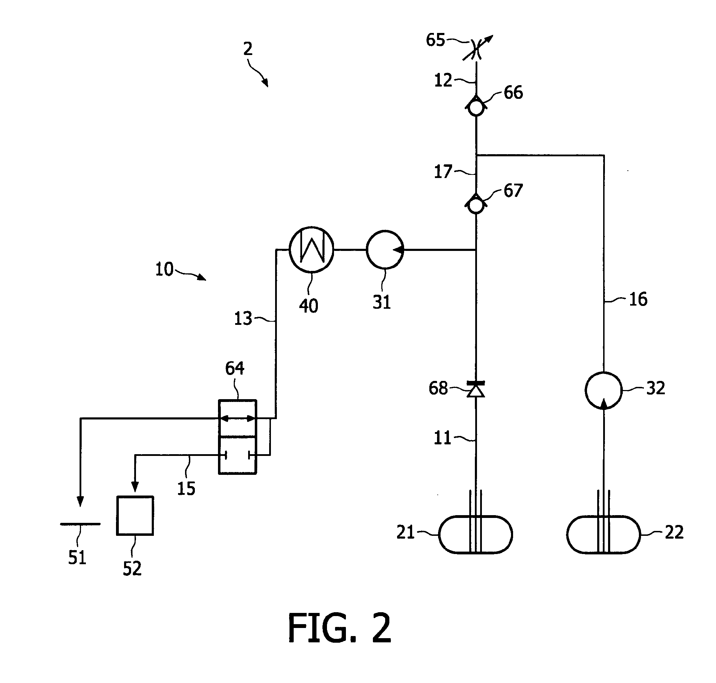

Figure 2 diagrammatically shows a set-up of a milk whisking device 2 according to a second preferred embodiment of the present invention.

The milk whisking device 2 according to the second preferred embodiment of the present invention resembles the milk whisking device 1 according to the first preferred embodiment of the present invention to a large extent. Basic aspects of the functioning of the milk whisking device 2 according to the second preferred embodiment of the present invention are suctioning and mixing of milk and air with a frothing pump 31, heating the mixture in case a hot beverage is required, and ensuring that the entire duct system 10 is filled with a cleaning fluid after every process of making milk froth. Consequently, milk is never stored in any of the components of the device 2 other than the milk reservoir 21.

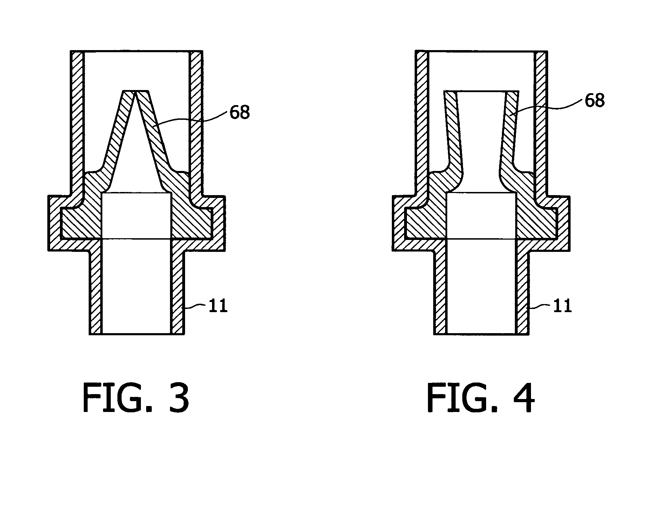

In comparison with the milk whisking device 1 according to the first preferred embodiment of the present invention, the bypass duct 14 and the heat exchanger valve 63 are omitted. Hence, a choice between hot or cold milk froth is not depending on a path through the duct system 10, but on whether the heat exchanger 40 is activated, or not. Furthermore, the milk valve 61 and the cleaning fluid/air valve 62 are replaced by other components, which are relatively cheap. In particular, a first single-directional check valve 66 is arranged in the air intake duct 12. This check valve 66 serves for preventing a flow of cleaning fluid through the restriction 65 when the cleaning pump 32 is operated. A second single-directional check valve 67 is arranged in a duct 17 where the air intake duct 12 and the cleaning fluid intake duct 16 are joined, and through which both ducts 12, 16 are merging in the central duct 13. This check valve 67 serves for preventing a back flow of milk. Furthermore, a bi-directional check valve 68 is arranged in the milk intake duct 11. This check valve 68 serves for letting pass milk in a direction towards the central duct 13 and for letting pass cleaning fluid in an opposite direction, as will be explained in the following on the basis of figures 3 and 4.

Normally, in a check valve, an open direction and a closed direction may be discerned. In figure 3, the open direction of the shown check valve 68 is a direction from bottom to top, and the closed direction is a direction from top to bottom. Figure 4 shows a position of the check valve 68 in which fluid is actually allowed to pass. On the basis of the fact that the check valve 68 is a bi-directional check valve 68, it is possible to realize this position in two ways, namely by having a flow of fluid in the open direction, and by having a flow of fluid in the closed direction while a pressure exerted on the check valve 68 is above a certain threshold.

When a process of making a milk product is performed, and only the frothing pump 31 is operated, milk is suctioned from the milk reservoir 21 through the check valve 68, wherein the direction of the flow equals the open direction of the check valve 68. When a cleaning action is initiated and the cleaning pump 32 is also activated, the check valve 68 is in a closed position as shown in figure 3. The cleaning fluid is not allowed to enter the milk intake duct 11, as a direction in which the cleaning fluid should pass the check valve 68 is the closed direction. However, when the frothing pump 31 is deactivated and only the cleaning pump 32 is operated, the frothing pump 31 acts like a closed valve, as a result of which a pressure exerted on the check valve 68 in the closed direction increases. When the pressure exceeds a predetermined threshold, the check valve 68 opens, and the cleaning fluid is allowed to enter the milk intake duct 11, which is cleaned in this way. As has already been mentioned in respect of the milk whisking device 1 according to the first preferred embodiment of the present invention, it is possible to let this situation exist only during the time which is needed for filling up the milk intake duct 11 with the cleaning fluid, wherein the time that only the cleaning pump 32 is operated is exactly the time which is needed for letting the front of the cleaning fluid reach the end of the milk intake duct 11. An advantageous effect of doing so is that mixing of the milk which is present in the milk reservoir 21 with cleaning fluid is avoided.

The application of check valves 66, 67, 68 is advantageous in that these components are relatively cheap, as has already been mentioned. Furthermore, the fact that the check valves 66, 67, 68 are relatively simple components and the fact that the check valves 66, 67, 68 are easy to clean by rinsing them with cleaning fluid also constitute important advantages over an application of electrical valves, for example, which are far more complex and require controlling signals for their operation.

In an alternative embodiment, which is not shown in any of the figures, the milk whisking device 1, 2 according to the present invention may comprise a sieve which is arranged at the end of the central duct 13. Use of such a sieve in a device without a cleaning function as the device 1, 2 according to the present invention would generate problems concerning cleaning of the sieve. However, such problems are absent in the device 1, 2 according to the present invention, wherein no cleaning effort is required from a user.

By using a sieve, it is achieved that a size of bubbles of the milk froth is determined by properties of the sieve rather than by a temperature of the frothed milk. The latter is the case when no sieve is present at an outlet where milk froth is emitted. As the properties of the sieve are a fact, whereas the temperature may vary and deviate from an optimal value, the use of a sieve is advantageous, as the bubble size may be accurately controlled. More constant froth quality can be realized in this way.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

In the foregoing, a device 1, 2 which is suitable to be used for whisking milk has been disclosed. The device 1, 2 comprises a duct system 10 having an intake duct I 1 for taking in milk, an intake duct 16 for taking in a cleaning fluid, and a central duct 13 in which both the milk intake duct 11 and the cleaning fluid intake duct 16 are merging, and further comprises a pump 31 which is arranged in the central duct 13. After the device 1, 2 has been operated for making a milk product, a cleaning action is performed, wherein both the central duct 13 and the milk intake duct 1 1 are filled with the cleaning fluid. In particular, the device 1, 2 also comprises a pump 32 which is arranged in the cleaning fluid intake duct 16, wherein filling the central duct 13 with the cleaning fluid is realized by operating both pumps 31, 32 while blocking the milk intake duct 11, and wherein filling the milk intake duct 11 with the cleaning fluid is realized by opening the milk intake duct 11 and only operating the pump 32 which is arranged in the cleaning fluid intake duct 16.

## Claims

1. Method for cleaning a device (1, 2) which is suitable to be used for whisking milk, which device (1, 2) comprises a duct system (10) having an intake duct (11) for taking in milk, an intake duct (16) for taking in a cleaning fluid, and a central duct (13) in which both the milk intake duct (11) and the cleaning fluid intake duct (16) are merging, and which device (1, 2) further comprises a pump (31) which is arranged in the central duct (13), **characterized in that** both the central duct (13) and the milk intake duct (11) are filled with the cleaning fluid.

2. Method according to claim 1, wherein the device (1, 2) further comprises flow controlling means (61, 68) which are capable of assuming a position for blocking the milk intake duct (11) and a position for allowing a flow of fluid to pass in two directions, and a pump (32) which is arranged in the cleaning fluid intake duct (16), wherein, in a first cleaning stage, both the pump (32) which is arranged in the cleaning fluid intake duct (16) and the pump (31) which is arranged in the central duct (13) are operated and the flow controlling means (61, 68) are put at a position for blocking the milk intake duct (11), and wherein, in a second cleaning stage, only the pump (32) which is arranged in the cleaning fluid intake duct (16) is operated and the flow controlling means (61, 68) are put at a position for allowing a flow of fluid to pass.

3. Method according to claim 2, wherein, in the second cleaning stage, the pump (32) which is arranged in the cleaning fluid intake duct (16) is only operated for pumping a volume of cleaning fluid which corresponds to the volume of a free portion of the milk intake duct (11) extending from a position where the flow controlling means (61, 68) are located, and wherein the operation of the pump (32) is terminated as soon as this volume has passed the pump (32).

4. Method according to claim 1, wherein the device (1) further comprises heating means (40) which are arranged in the central duct (13), a bypass duct (14) which is connected in parallel to a portion of the central duct (13) where the heating means (40) are located, and flow controlling means (63) which are capable of assuming a position for blocking one of the bypass duct (14) and the portion of the central duct (13) where the heating means (40) are located, while leaving another of these ducts (13, 14) open, wherein the flow controlling means (63) are kept at a position which has been set during a preceding process of operating the device (1) for emitting a milk product.

5. Method according to claim 1, wherein the device (1, 2) further comprises an outlet duct (15) which is merging in the central duct (13) at a position downstream of the pump (31) which is arranged in the central duct (13), and flow controlling means (64) which are capable of blocking one of the outlet duct (15) and the central duct (13) at a position downstream of the connection of the outlet duct (15) to the central duct (13) while leaving another of these ducts (13, 15) open, wherein the flow controlling means (64) are put at a different position than a position which is set during processes of operating the device (1, 2) for emitting a milk product.

6. Method according to claim 1, wherein the device (1) further comprises an intake duct (12) for taking in air, which merges in the central duct (13) at the same position as the cleaning fluid intake duct (16), and flow controlling means (62) which are capable of blocking one of the cleaning fluid intake duct (16) and the air intake duct (12) while leaving another of these ducts (12, 16) open, wherein the flow controlling means (62) are set in a position for blocking the air intake duct (12).

7. Device (1, 2) which is suitable to be used for whisking milk, which device (1, 2) comprises a duct system (10) having an intake duct (11) for taking in milk, an intake duct (16) for taking in a cleaning fluid, and a central duct (13) in which both the milk intake duct (11) and the cleaning fluid intake duct (16) are merging, and which device (1, 2) further comprises flow controlling means (61, 68) which are capable of assuming a position for blocking the milk intake duct (11) and a pump (31) which is arranged in the central duct (13), **characterized in that** the device further comprises a pump (32) which is arranged in the cleaning fluid intake duct (16), and that the flow controlling means (61, 68) are capable of assuming a position for allowing a flow of fluid to pass in two directions in the milk intake duct (11).

8. Device (1) according to claim 7, further comprising heating means (40) which are arranged in the central duct (13), a bypass duct (14) which is connected in parallel to a portion of the central duct (13) where the heating means (40) are located, and flow controlling means (63) which are capable of assuming a position for blocking one of the bypass duct (14) and the portion of the central duct (13) where the heating means (40) are located, while leaving another of these ducts (13, 14) open.

9. Device (1, 2) according to claim 7, further comprising a sieve which is arranged at an outlet of the duct system (10).

10. Device (1, 2) according to claim 7, further comprising an outlet duct (15) which is merging in the central duct (13) at a position downstream of the pump (31) which is arranged in the central duct (13), and flow controlling means (64) which are capable of blocking one of the outlet duct (15) and the central duct (13) at a position downstream of the connection of the outlet duct (15) to the central duct (13) while leaving another of these ducts (13, 15) open.

11. Device (1, 2) according to claim 10, further comprising a drip tray (52) for receiving waste fluid, wherein one of the central duct (13) and the outlet duct (15) is arranged for emitting fluid to the drip tray (52), and wherein a sieve is arranged in another of the central duct (13) and the outlet duct (15).

12. Device (1) according to claim 7, further comprising an intake duct (12) for taking in air, which merges in the central duct (13) at the same position as the cleaning fluid intake duct (16), and flow controlling means (62) which are capable of blocking one of the cleaning fluid intake duct (16) and the air intake duct (12) while leaving another of these ducts (12, 16) open.

13. Device (2) according to claim 7, further comprising an intake duct (12) for taking in air, which merges in the central duct (13), and a single-directional check valve (66) which is arranged in the air intake duct (12).

14. Device (2) according to claim 7, further comprising an intake duct (12) for taking in air, which merges in the central duct (13) at the same position as the cleaning fluid intake duct (16), wherein a portion of the cleaning fluid intake duct (16) and a portion of the air intake duct (12) are joined to one duct (17), and wherein a single-directional check valve (67) is arranged in this one duct (17).

15. Device (2) according to claim 7, wherein the flow controlling means comprise a bi-directional check valve (68).

## Patentansprüche

1. Verfahren zum Reinigen einer Vorrichtung (1, 2), die sich zum Aufschäumen von Milch eignet, wobei die Vorrichtung (1, 2) ein Leitungssystem (10) mit einer Einlassleitung (11) zur Aufnahme von Milch, einer Einlassleitung (16) zur Aufnahme einer Reinigungsflüssigkeit sowie einer Mittelleitung (13), in der die Milcheinlassleitung (11) und die Reinigungsflüssigkeitseinlassleitung (16) ineinander übergehen, umfasst, und wobei die Vorrichtung (1, 2) weiterhin eine Pumpe (31) aufweist, die in der Mittelleitung (13) angeordnet ist, **dadurch gekennzeichnet, dass** die Mittelleitung (13) und die Milcheinlassleitung (11) mit der Reinigungsflüssigkeit gefüllt sind.

2. Verfahren nach Anspruch 1, wobei die Vorrichtung (1, 2) weiterhin Durchflusssteuerungsmittel (61, 68), die imstande sind, eine Position zur Sperrung der Milcheinlassleitung (11) sowie eine Position, um einen Flüssigkeitsdurchfluss in zwei Richtungen zu ermöglichen, einzunehmen, sowie eine Pumpe (32) umfasst, die in der Reinigungsflüssigkeitseinlassleitung (16) angeordnet ist, wobei in einer ersten Reinigungsstufe die Pumpe (32), die in der Reinigungsflüssigkeitseinlassleitung (16) angeordnet ist, und die Pumpe (31), die in der Mittelleitung (13) angeordnet ist, betrieben und die Durchflusssteuerungsmittel (61, 68) in eine Position zur Sperrung der Milcheinlassleitung (11) versetzt werden, und wobei in einer zweiten Reinigungsstufe lediglich die Pumpe (32), die in der Reinigungsflüssigkeitseinlassleitung (16) angeordnet ist, betrieben wird und die Durchflusssteuerungsmittel (61, 68) in eine Position versetzt werden, um einen Flüssigkeitsdurchfluss zu ermöglichen.

3. Verfahren nach Anspruch 2, wobei in der zweiten Reinigungsstufe die Pumpe (32), die in der Reinigungsflüssigkeitseinlassleitung (16) angeordnet ist, lediglich zum Pumpen eines Reinigungsflüssigkeitsvolumens betrieben wird, das dem Volumen eines freien Abschnitts der Milcheinlassleitung (11) entspricht, der sich von einer Position aus erstreckt, an der sich die Durchflusssteuerungsmittel (61, 68) befinden, und wobei der Betrieb der Pumpe (32) beendet wird, sobald dieses Volumen die Pumpe (32) passiert hat.

4. Verfahren nach Anspruch 1, wobei die Vorrichtung (1) weiterhin Heizmittel (40), die in der Mittelleitung (13) angeordnet sind, eine Umgehungsleitung (14), die parallel zu einem Abschnitt der Mittelleitung (13), wo sich die Heizmittel (40) befinden, sowie Durchflusssteuerungsmittel (63) umfasst, die imstande sind, eine Position einzunehmen, um die Umgehungsleitung (14) oder den Abschnitt der Mittelleitung (13), in dem sich die Heizmittel (40) befinden, zu sperren und dabei eine andere dieser Leitungen (13, 14) offen zu lassen, wobei die Durchflusssteuerungsmittel (63) in einer Position gehalten werden, die während eines vorhergehenden Vorgangs zum Betreiben der Vorrichtung (1) zum Zwecke der Abgabe eines Milchprodukts eingestellt wurde.

5. Verfahren nach Anspruch 1, wobei die Vorrichtung (1, 2) weiterhin eine Auslassleitung (15), die an einer Stelle hinter der in der Mittelleitung (13) angeordneten Pumpe (31) in die Mittelleitung (13) übergeht, sowie Durchflusssteuerungsmittel (64) umfasst, die imstande sind, die Auslassleitung (15) oder die Mittelleitung (13) an einer Stelle hinter der Verbindung der Auslassleitung (15) mit der Mittelleitung (13) zu sperren und dabei eine andere dieser Leitungen (13, 15) offen zu lassen, wobei die Durchflusssteuerungsmittel (64) in eine andere Position als eine Position, die bei Vorgängen zum Betreiben der Vorrichtung (1, 2) zum Zwecke der Abgabe eines Milchprodukts eingestellt wird, versetzt werden.

6. Verfahren nach Anspruch 1, wobei die Vorrichtung (1) weiterhin eine Einlassleitung (12) zur Aufnahme von Luft, die in die Mittelleitung (13) an der gleichen Stelle wie die Reinigungsflüssigkeitseinlassleitung (16) übergeht, sowie Durchflusssteuerungsmittel (62) umfasst, die imstande sind, die Reinigungsflüssigkeitseinlassleitung (16) oder die Lufteinlassleitung (12) zu sperren und dabei eine andere dieser Leitungen (12, 16) offen zu lasen, wobei die Durchflusssteuerungsmittel (62) in eine Position zur Sperrung der Lufteinlassleitung (12) gebracht werden.

7. Vorrichtung (1, 2), die sich zum Aufschäumen von Milch eignet, wobei die Vorrichtung (1, 2) ein Leitungssystem (10) mit einer Einlassleitung (11) zur Aufnahme von Milch, einer Einlassleitung (16) zur Aufnahme einer Reinigungsflüssigkeit sowie einer Mittelleitung (13), in der die Milcheinlassleitung (11) und die Reinigungsflüssigkeitseinlassleitung (16) ineinander übergehen, umfasst, und wobei die Vorrichtung (1, 2) weiterhin Durchflusssteuerungsmittel (61, 68), die imstande sind, eine Position zur Sperrung der Milcheinlassleitung (11) einzunehmen, sowie eine Pumpe (31) umfasst, die in der Mittelleitung (13) angeordnet ist, **dadurch gekennzeichnet, dass** die Vorrichtung weiterhin eine Pumpe (32) umfasst, die in der Reinigungsflüssigkeitseinlassleitung (16) angeordnet ist, und dass die Durchflusssteuerungsmittel (61, 68) imstande sind, eine Position einzunehmen, um in der Milcheinlassleitung (11) einen Flüssigkeitsdurchfluss in zwei Richtungen zu ermöglichen.

8. Vorrichtung (1) nach Anspruch 7, die weiterhin Heizmittel (40), die in der Mittelleitung (13) angeordnet sind, eine Umgehungsleitung (14), die parallel zu einem Abschnitt der Mittelleitung (13), in dem sich die Heizmittel (40) befinden, vorgesehen ist, sowie Durchflusssteuerungsmittel (63) umfasst, die imstande sind, eine Position einzunehmen, um die Umgehungsleitung (14) oder den Abschnitt der Mittelleitung (13), in dem sich die Heizmittel (40) befinden, zu sperren und dabei eine andere dieser Leitungen (13, 14) offen zu lassen.

9. Vorrichtung (1, 2) nach Anspruch 7, die weiterhin ein Sieb umfasst, das an einem Auslass des Leitungssystems (10) angeordnet ist.

10. Vorrichtung (1, 2) nach Anspruch 7, die weiterhin eine Auslassleitung (15), die an einer Stelle hinter der in der Mittelleitung (13) angeordneten Pumpe (31) in die Mittelleitung (13) übergeht, sowie Durchflusssteuerungsmittel (64) umfasst, die imstande sind, die Auslassleitung (15) oder die Mittelleitung (13) an einer Stelle hinter der Verbindung der Auslassleitung (15) mit der Mittelleitung (13) zu sperren und dabei eine andere dieser Leitungen (13, 15) offen zu lassen.

11. Vorrichtung (1, 2) nach Anspruch 10, die weiterhin eine Auffangschale (52) zur Aufnahme von Abfallflüssigkeit umfasst, wobei die Mittelleitung (13) oder die Auslassleitung (15) so vorgesehen ist, dass sie Flüssigkeit an die Auffangschale (52) abgibt, und wobei ein Sieb in der anderen der Leitungen, der Mittelleitung (13) oder der Auslassleitung (15), angeordnet ist.

12. Vorrichtung (1) nach Anspruch 7, die weiterhin eine Einlassleitung (12) zur Aufnahme von Luft, die an der gleichen Stelle wie die Reinigungsflüssigkeitseinlassleitung (16) in die Mittelleitung (13) übergeht, sowie Durchflusssteuerungsmittel (62) umfasst, die imstande sind, die Reinigungsflüssigkeitseinlassleitung (16) oder die Lufteinlassleitung (12) zu sperren und dabei eine andere dieser Leitungen (12, 16) offen zu lassen.

13. Vorrichtung (2) nach Anspruch 7, die weiterhin eine Einlassleitung (12) zur Aufnahme von Luft, die in die Mittelleitung (13) übergeht, sowie ein eindirektionales Absperrventil (66) umfasst, das in der Lufteinlassleitung (12) angeordnet ist.

14. Vorrichtung (2) nach Anspruch 7, die weiterhin eine Einlassleitung (12) zur Aufnahme von Luft umfasst, die an der gleichen Stelle wie die Reinigungsflüssigkeitseinlassleitung (16) in die Mittelleitung (13) übergeht, wobei ein Abschnitt der Reinigungsflüssigkeitseinlassleitung (16) und ein Abschnitt der Lufteinlassleitung (12) mit einer Leitung (17) verbunden sind, und wobei ein eindirektionales Absperrventil (67) in dieser einen Leitung (17) angeordnet ist.

15. Vorrichtung (2) nach Anspruch 7, wobei die Durchflusssteuerungsmittel ein bidirektionales Absperrventil (68) umfassen.

## Revendications

1. Procédé de nettoyage d'un dispositif (1, 2) qui est destiné à être utilisé pour fouetter le lait, lequel dispositif (1, 2) comprend un système de conduits (10) ayant un conduit d'admission (11) pour l'alimentation en lait, un conduit d'admission (16) pour l'alimentation en fluide de nettoyage, et un conduit central (13) dans lequel se rejoignent le conduit d'admission de lait (11) et le conduit d'admission de fluide de nettoyage (16), et lequel dispositif (1, 2) comprend en outre une pompe (31) qui est disposée dans le conduit central (13), **caractérisé en ce que** le conduit central (13) et le conduit d'admission de lait (11) sont remplis du fluide de nettoyage.

2. Procédé selon la revendication 1, dans lequel le dispositif (1, 2) comprend en outre un moyen de régulation d'écoulement (61, 68) apte à prendre une position pour bloquer le conduit d'admission de lait (11) et une position pour permettre l'écoulement de fluide dans les deux sens, et une pompe (32) qui est disposée dans le conduit d'admission de fluide de nettoyage (16), dans lequel, à une première étape de nettoyage, la pompe (32) qui est disposée dans le conduit d'admission de fluide de nettoyage (16) et la pompe (31) qui est disposée dans le conduit central (13) sont actionnées et le moyen de régulation d'écoulement (61, 68) est mis à une position pour bloquer le conduit d'admission de lait (11), et dans lequel, à une deuxième étape de nettoyage, uniquement la pompe (32) qui est disposée dans le conduit d'admission de fluide de nettoyage (16) est actionnée et le moyen de régulation d'écoulement (61, 68) est mis à une position pour permettre l'écoulement de fluide.

3. Procédé selon la revendication 2, dans lequel, à la deuxième étape de nettoyage, la pompe (32) qui est disposée dans le conduit d'admission de fluide de nettoyage (16) est uniquement actionnée pour pomper un volume de fluide de nettoyage qui correspond au volume d'une partie libre du conduit d'admission de lait (11) s'étendant d'une position à laquelle se trouve le moyen de régulation d'écoulement (61, 68), et dans lequel l'actionnement de la pompe (32) se termine dès que ce volume a passé la pompe (32).

4. Procédé selon la revendication 1, dans lequel le dispositif (1) comprend en outre un moyen de chauffage (40) qui est disposé dans le conduit central (13), un conduit de dérivation (14) qui est relié en parallèle à une partie du conduit central (13) où se trouve le moyen de chauffage (40), et un moyen de régulation d'écoulement (63) apte à prendre une position pour bloquer l'un du conduit de dérivation (14) et de la partie du conduit central (13) où se trouve le moyen de chauffage (40), tout en laissant l'autre de ces conduits (13, 14) ouvert, dans lequel le moyen de régulation d'écoulement (63) est maintenu à une position qui a été établie au cours d'un processus précédent d'actionnement du dispositif (1) pour émettre un produit laitier.

5. Procédé selon la revendication 1, dans lequel le dispositif (1, 2) comprend en outre un conduit de sortie (15) qui rejoint le conduit central (13) à une position en aval de la pompe (31) qui est disposée dans le conduit central (13), et un moyen de régulation d'écoulement (64) apte à bloquer l'un du conduit de sortie (15) et du conduit central (13) à une position en aval de la jonction du conduit de sortie (15) au conduit central (13) tout en laissant l'autre de ces conduits (13, 15) ouvert, dans lequel le moyen de régulation d'écoulement (64) est mis à une position différente d'une position qui est établie au cours de processus d'actionnement du dispositif (1, 2) pour émettre un produit laitier.

6. Procédé selon la revendication 1, dans lequel le dispositif (1) comprend en outre un conduit d'admission (12) pour l'alimentation en air, qui rejoint le conduit central (13) à la même position que le conduit d'admission de fluide de nettoyage (16), et un moyen de régulation d'écoulement (62) apte à bloquer l'un du conduit d'admission de fluide de nettoyage (16) et du conduit d'admission d'air (12) tout en laissant l'autre de ces conduits (12, 16) ouvert, dans lequel le moyen de régulation d'écoulement (62) est mis à une position pour bloquer le conduit d'admission d'air (12).

7. Dispositif (1, 2) qui est destiné à être utilisé pour fouetter le lait, lequel dispositif (1, 2) comprend un système de conduits (10) ayant un conduit d'admission (11) pour l'alimentation en lait, un conduit d'admission (16) pour l'alimentation en fluide de nettoyage, et un conduit central (13) dans lequel se rejoignent le conduit d'admission de lait (11) et le conduit d'admission de fluide de nettoyage (16), et lequel dispositif (1, 2) comprend en outre un moyen de régulation d'écoulement (61, 68) apte à prendre une position pour bloquer le conduit d'admission de lait (11) et une pompe (31) disposée dans le conduit central (13), **caractérisé en ce que** le dispositif comprend en outre une pompe (32) qui est disposée dans le conduit d'admission de fluide de nettoyage (16) et le moyen de régulation d'écoulement (61, 68) est apte à prendre une position pour permettre l'écoulement de fluide dans les deux sens dans le conduit d'admission de lait (11).

8. Dispositif (1) selon la revendication 7, comprenant en outre un moyen de chauffage (40) qui est disposé dans le conduit central (13), un conduit de dérivation (14) qui est relié en parallèle à une partie du conduit central (13) où se trouve le moyen de chauffage (40), et un moyen de régulation d'écoulement (63) apte à prendre une position pour bloquer l'un du conduit de dérivation (14) et de la partie du conduit central (13) où se trouve le moyen de chauffage (40), tout en laissant l'autre de ces conduits (13, 14) ouvert.

9. Dispositif (1, 2) selon la revendication 7, comprenant en outre un sas disposé à une sortie du système de conduits (10).

10. Dispositif (1, 2) selon la revendication 7, comprenant en outre un conduit de sortie (15) qui rejoint le conduit central (13) à une position en aval de la pompe (31) qui est disposée dans le conduit central (13), et un moyen de régulation d'écoulement (64) apte à bloquer l'un du conduit de sortie (15) et du conduit central (13) à une position en aval de la jonction du conduit de sortie (15) au conduit central (13) tout en laissant l'autre de ces conduits (13, 15) ouvert.

11. Dispositif (1, 2) selon la revendication 10, comprenant en outre un bac d'égouttage (52) pour recevoir le fluide usé, dans lequel l'un du conduit central (13) et du conduit de sortie (15) est disposé pour émettre du fluide dans le bac d'égouttage (52), et dans lequel un sas est disposé dans l'autre du conduit central (13) et du conduit de sortie (15).

12. Dispositif (1, 2) selon la revendication 7, comprenant en outre un conduit d'admission (12) pour l'alimentation en air, qui rejoint le conduit central (13) à la même position que le conduit d'admission de fluide de nettoyage (16), et un moyen de régulation d'écoulement (62) apte à bloquer l'un du conduit d'admission de fluide de nettoyage (16) et du conduit d'admission d'air (12) tout en laissant l'autre de ces conduits (12, 16) ouvert.

13. Dispositif (1, 2) selon la revendication 7, comprenant en outre un conduit d'admission (12) pour l'alimentation en air, qui rejoint le conduit central (13), et un clapet antiretour unidirectionnel (66) qui est disposé dans le conduit d'admission d'air (12).

14. Dispositif (2) selon la revendication 7, comprenant en outre un conduit d'admission (12) pour l'alimentation en air, qui rejoint le conduit central (13) à la même position que le conduit d'admission de fluide de nettoyage (16), dans lequel une partie du conduit d'admission de fluide de nettoyage (16) et une partie du conduit d'admission d'air (12) rejoignent un conduit (17), et dans lequel un clapet antiretour unidirectionnel (67) est disposé dans ce conduit (17).

15. Dispositif (2) selon la revendication 7, dans lequel le moyen de régulation d'écoulement comprend un clapet antiretour bidirectionnel (68).
